# EUROPÄISCHE PATENTSCHRIFT

(11) **EP 0 754 533 B1**
(45) Veröffentlichungstag und Bekanntmachung des Hinweises auf die Patenterteilung: **27.03.2002**
(21) Anmeldenummer: 96110977.4
(22) Anmeldetag: 08.07.1996
(51) Int. Cl.: B29C 45/17, B29C 45/16, B29C 43/18

(54) **Verfahren zum Verarbeiten von Kunststoff**
Method for processing plastic material
Procédé pour traiter de la matière plastique

(30) Priorität: 17.07.1995 AT 38795 U
(43) Veröffentlichungstag der Anmeldung: 22.01.1997
(73) Patentinhaber: Engel Maschinenbau Gesellschaft m.b.H., A-4311 Schwertberg (AT)
(72) Erfinder: Steinbichler, Georg, 8786 Rottenmann (AT)
(74) Vertreter: Hofinger, Engelbert, Dr.Dr.

(56) Entgegenhaltungen:
- EP-A- 0 393 315
- EP-A- 0 585 799
- EP-A- 0 624 447
- DE-A- 4 240 017
- GB-A- 2 025 838
- GB-A- 2 260 932
- US-A- 3 865 915

## Beschreibung

Die Erfindung bezieht sich auf ein Verfahren zum Verarbeiten von Kunststoff, wobei der Kunststoff drucklos über die untere Formhälfte einer in einer Horizontalebene geteilten Form verteilt wird, anschließend die Form geschlossen wird und nach dem Schließen der Form der Formhohlraum zunächst vollständig mit Schmelze gefüllt ist worauf in einen Teilbereich der Form ein Fluid eingepreßt wird.

Während die meisten Kunststoffgegenstände durch Einspritzen von Kunststoff unter Druck in die geschlossene Form hergestellt werden, gibt es doch Fälle, in denen es günstiger ist, den Kunststoff drucklos in der offenen Form zu verteilen. Im allgemeinen liegt diese Situation vor, wenn die gleichmäßige Verteilung des Kunststoffes durch Einspritzen schwer möglich ist. Das kann seinen Grund darin haben, daß der Forminnenraum dem gleichmäßigen Durchströmen des eingespritzten Kunststoffes Widerstand leistet. Für die Praxis wichtiger ist das Pressen von Kunststoff, wenn es darum geht, thermoplastische Formteile mit flächigem Material zu verbinden, welches unter den Bedingungen des Spritzgießens Schaden nehmen würde.

Beim Spritzpressen arbeitet man üblicherweise mit Drücken in der Größenordnung von 50 - 100 bar, die weit unter dem üblichen Einspritzdruck in der Größenordnung von 350 bar liegen, obwohl die Viskosität des Kunststoffes hier bewußt hoch gewählt wird. Beim Spritzpressen kommt es nämlich nicht darauf an, den Kunststoff möglichst reibungsfrei zu verteilen, sondern es ist wichtig, die bereits vor dem Schließen der Form erzielte Verteilung des Kunststoffes im wesentlichen aufrechtzuerhalten. In diesem Sinne ist eine niedrige Temperatur der Schmelze und ein erheblicher Anteil des Kunststoffes an langfasrigen Verstärkungsstoffen kein Nachteil.

Beim Spritzgießen ist es in den letzten Jahren zunehmend üblich geworden, in den zunächst in die Form eingebrachten Kunststoff ein weiteres Material einzubringen, welches Hohlräume im Kunststoff ausfüllt. Die Übertragung dieses Verfahrens auf das Spritzpressen und insbesondere das Hinterpressen von Einlagen ist bisher nur sehr zögernd erfolgt. Einerseits setzt dies nämlich voraus, daß die Einrichtungen adaptiert werden müssen, da der beim Einbringen des zweiten Materials auftretende Druck wesentlich höher ist als der zur Verteilung des Kunststoffes in der Form notwendige Druck. Sofern ausnahmsweise die nachträgliche Einbringung eines Fluids in einen in die offene Form eingebrachten Kunststoff vorgeschlagen worden ist, so hat man auf jeden Fall jede größere Bewegung des bereits eingebrachten Kunststoffes entlang der Formwand verhindert, indem entweder die Form zunächst nur unvollständig gefüllt wurde (vgl. US-PS 4,968,474) oder indem die Form beim Einbringen des zweiten Mediums stetig vergrößert wurde (vgl EP 0 498 444 A2, EP 0 624 447 A1)

Ausgehend von diesem Stand der Technik war es Aufgabe der Erfindung, die Möglichkeit für die Bildung von Hohlräumen an vorbestimmten Stellen in Formhohlraum zu schaffen ohne die Formward im benachbarten Bereich verscheibbar zu machen.

Diese Aufgabe wird erfindungsgemäß durch das Verfahren nach Auspruch 1 gelöst. Zweckmäßige Weiterbildungen der Erfindung sind begenstand der abhängigen Ansprüche.

Die Erfindung geht von der überraschenden Erkenntnis aus, daß es auch unter den Verfahrensbedingungen des Spritzpressens möglich ist, die Form zunächst vollständig zu füllen und anschließend einen Teil der Schmelze durch ein Fluid in eine Nebenkavität zu verdrängen. Insbesondere wenn es darum geht, einen großflächigen Gegenstand herzustellen, welcher im Inneren oder an der Oberfläche eine Einlage aufweist und der mit Verstärkungsrippen versehen ist, führt die Erfindung zu einem völlig unerwarteten Ergebnis. Es ist nunmehr möglich, die Einlage mit einem ersten Kunststoff zu umgeben und diesen Kunststoff dann aus dem Bereich der Rippen zu verdrängen und insbesondere mit einem durch Glasfasern verstärkten Kunststoff zu ersetzen. Es wird hier also erstmals ein zweistufiges Verfahren vorgeschlagen, bei welchem eine Einlage in einem ersten Verfahrensschritt in der offenen Form hinterpreßt und in einem zweiten Verfahrensschritt in der geschlossenen Form hinterspritzt wird. Die zugrundeliegende Überlegung ist die, daß nach dem anfänglichen Hinterpressen der Einlage diese bereits so weit gegen Faltenbildung geschützt ist, daß auf das schonende Preßverfahren verzichtet werden kann und der zweite Kunststoff unter dem üblichen Druck von 50 - 350 bar eingespritzt werden kann. Dieser Druck kann während der Abkühlung des Formteiles aufrechterhalten werden, wodurch im Gegensatz zum drucklosen Abkühlen beim Spritzpressen ein Schrumpfen des Formteiles vermieden wrd.

Weitere Einzelheiten der Erfindung werden anschließend anhand der Zeichnung erläutert.
Fig. 1 zeigt in schematischer Seitenansicht eine bekannte Einrichtung zum Hinterpressen von Einlagen,
Fig. 2 stellt eine gegenüber Fig. 1 abgeänderte Art der Einbringung des Kunststoffes in die geöffnete Form dar,
Fig. 3 ist ein schematischer Schnitt durch die geschlossene Form bei einem Ausführungsbeispiel der Erfindung.

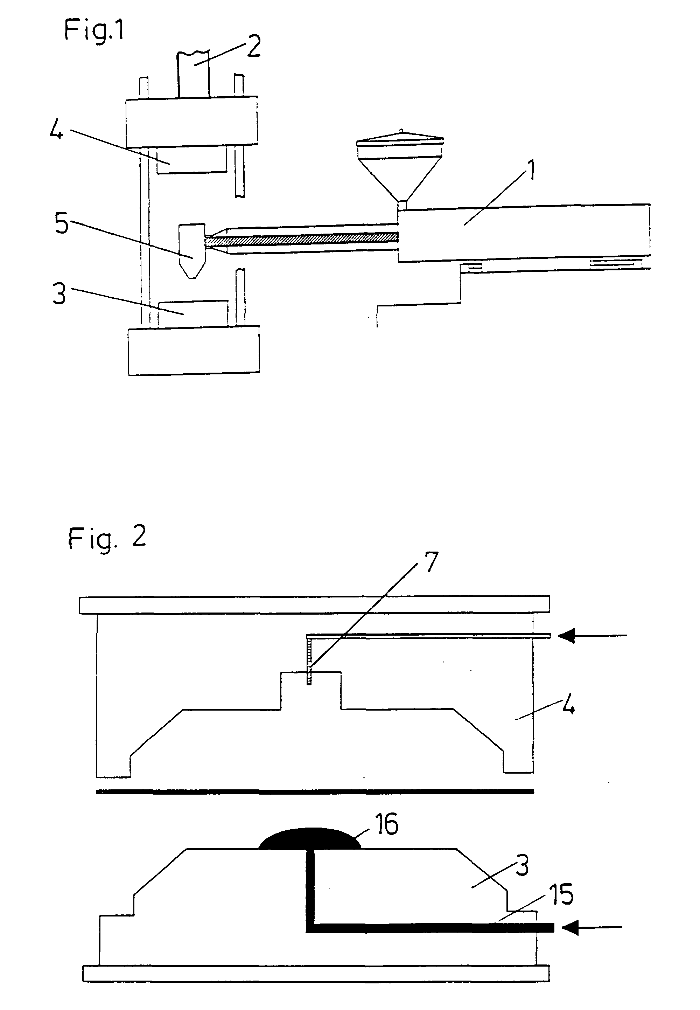

Die Hinterpreßtechnik ist vor allem für großflächige Formteile wirtschaftlich einsetzbar. Gemäß Fig. 1 wird dabei von einer horizontal angeordneten verfahrbaren Spritzeinheit 1 mittels Breitschlitzdüse 5 ein Schmelzekuchen ins vollständig geöffnete, vertikale Werkzeug abgelegt. Wie in Fig. 2 dargestellt, kann die Zuführung des Kunststoffes 16 auch durch das Werkzeug mittels einer Leitung 15 erfolgen.

Im anschließend ablaufenden Preßvorgang wird die Formgebung durchgeführt, sowie die Verbindung mit dem Dekormaterial hergestellt. Durch die gute Vorverteilung muß die Schmelze während des Hinterpreßvorganges, der durch das Schließen der Werkzeughälften 3,4 mittels der Schließeinheit 2 erfolgt, nur mehr kurze Fließwege überwinden. Deshalb werden nur geringe Schmelzedrücke zum Ausformen der Formteilgeometrie benötigt.

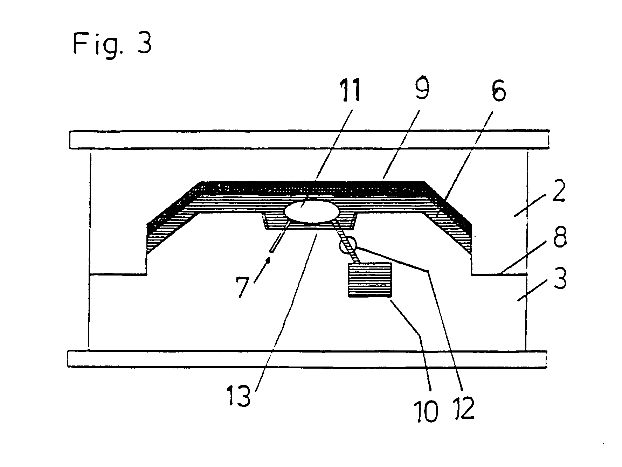

Der Verfahrensablauf in der durch die Erfindung modifizierten Form ergibt sich aus Fig. 3. Das Verfahren umfaßt folgende Schritte:
- Aufbringen eines Schmelzefilms auf die untere Hälfte 3 des vollständig geöffneten Werkzeugs,
- Einlegen der Textil- oder Folienkomponente 9 irgendwo in die Form,
- Hinterpreßvorgang durch Schließen des Werkzeugs,
- Injektion eines Fluids unter Verdrängung eines Teils der zunächst eingebrachten Schmelze,
- Abkühlen und Entnehmen des Formteiles.

Das Besondere am erfindungsgemäßen Verfahren liegt darin, daß damit Formkörper hergestellt weden, welche Verdickungen 13 in Form von Rippen od. dgl. aufweisen. Dazu wird zuerst in jenen Bereich der unteren Formhälfte 3, welcher später die Rippe 13 bilden soll, mehr Kunststoff aufgebracht als in den Randbereichen. Dadurch kommt es beim Schließen der Form, welche mit einer Tauchkante 8 versehen ist, nur mehr zu geringen Bewegungen der Schmelze relativ zur textilen Einlage 9. Durch eine Düse 7 wird ein Fluid in jenen Teilbereich des Formhohlraumes 6 eingepreßt, welcher später die Rippe 13 bilden soll. Da der Formhohlraum 6 zunächst völlig mit Schmelze gefüllt ist, wird ein Teil der Schmelze durch das Gas in eine Nebenkavität 10 verdrängt. Diese Nebenkavität 10 kann durch einen Verschlußmechanismus 12 absperrbar sein.

Von besonderem Interesse ist der Fall, daß das durch die Düse 7 zugeführte Fluid kein Gas, sondern ein Kunststoff ist, welcher der Rippe 13 erhöhte Festigkeit verleiht, beispielsweise weil dieser Kunststoff it Glasfasern versetzt ist. Ein derartiger Kunststoff würde sich für den ersten Verfahrensschritt weniger eignen, sein lokaler Einsatz ist hingegen problemlos.

## Patentansprüche

1. Verfahren zum Verarbeiten von Kunststoff, wobei der Kunststoff drucklos über die untere Formhälfte (3) einer in einer Horizontalebene geteilten Form verteilt wird, anschließend die Form geschlossen wird und nach dem Schließen der Form der Formhohlraum (6) zunächst vollständig mit Schmelze gefüllt ist, worauf in einen Teilbereich der Form ein Fluid eingepreßt wird,
**dadurch gekennzeichnet, daß**
ein Teil der Schmelze durch das Fluid in eine Nebenkavität (10) verdrängt wird.

2. Verfahren nach Anspruch 1, **dadurch gekennzeichnet, daß** die Nebenkavität (10) über einen Verschlußmechanismus (12) absperrbar ist.

3. Verfahren nach Anspruch 1 oder 2, **dadurch gekennzeichnet, daß** das eingepreßte Fluid ein Kunststoff ist.

4. Verfahren nach Anspruch 3 oder 2, **dadurch gekennzeichnet, daß** der Kunststoff Verstärkungsfasern enthält.

5. Verfahren nach einem der Ansprüche 1 bis 4, **dadurch gekennzeichnet, daß** vor dem Schließen der Form ein flächiges Material (9) in diese Form eingebracht wird.

6. Verfahren nach einem der Ansprüche 1 bis 5, **dadurch gekennzeichnet, daß** die Verteilung von Kunststoff über die untere Formhälfte (3) in Abhängigkeit von der jeweiligen Innenhöhe der Form erfolgt.

## Claims

1. A method of processing plastic material, wherein the plastic material is pressure-lessly distributed over the lower mould half (3) of a mould divided in a horizontal plane, then the mould is closed and after closure of the mould the mould cavity (6) is entirely filled with molten material whereupon a fluid is injected into a part of the mould, **characterised in that** a portion of the molten material is displaced into a secondary cavity (10) by the fluid.

2. A method according to claim 1, **characterised in that** the secondary cavity (10) can be shut off by way of a closure mechanism (12).

3. A method according to claim 1 or claim 2 **characterised in that** the pressed-in fluid is a plastic material.

4. A method according to claim 3 or claim 2 **characterised in that** the plastic material contains reinforcing fibres.

5. A method according to one of claims 1 to 4 **characterised in that** prior to closure of the mould a flat material (9) is introduced into this mould.

6. A method according to one of claims 1 to 5 **characterised in that** the distribution of plastic material over the lower mould half (3) is performed in dependence on the respective internal height of the mould.

## Revendications

1. Procédé pour la transformation de matières plastiques, dans lequel la matière plastique est distribuée sans pression sur la moitié inférieure (3) du moule d'un moule divisé dans un plan horizontal, ensuite le moule est refermé et après la fermeture du moule l'espace creux du moule (6) est tout d'abord complètement rempli avec de la matière fondue, opération par laquelle un fluide est injecté dans une zone partielle du moule, **caractérisé en ce qu'**une partie de la matière fondue est déplacée au moyen du fluide dans une cavité annexe (10).

2. Procédé selon la revendication 1, **caractérisé en ce que** la cavité annexe (10) peut être obturée par un mécanisme de fermeture (12).

3. Procédé selon la revendication 1 ou 2, **caractérisé en ce que** le fluide injecté est une matière plastique.

4. Procédé selon la revendication 3 ou 2, **caractérisé en ce que** la matière plastique contient des fibres de renforcement.

5. Procédé selon l'une des revendications 1 à 4, **caractérisé en ce qu'**avant la fermeture du moule on introduit dans ce moule un matériau de surface (9).

6. Procédé selon l'une des revendications 1 à 5, **caractérisé** en ce la distribution de matière plastique sur la moitié inférieur du moule (3) est effectuée en fonction de la hauteur intérieure respective du moule.
